# EUROPÄISCHE PATENTSCHRIFT

(11) **EP 4 382 333 B1**
(45) Veröffentlichungstag und Bekanntmachung des Hinweises auf die Patenterteilung: **09.04.2025**
(21) Anmeldenummer: 22211362.3
(22) Anmeldetag: 05.12.2022
(51) Int. Cl.: B60K 15/03

(54) **KRAFTFAHRZEUGTANK**
MOTOR VEHICLE TANK
RÉSERVOIR DE VÉHICULE AUTOMOBILE

(43) Veröffentlichungstag der Anmeldung: 12.06.2024
(73) Patentinhaber: MAGNA Energy Storage Systems GmbH Werk Schwäbisch Gmünd, 73529 Schwäbisch Gmünd (DE)
(72) Erfinder: ZANEK, Steffen, 73525 Schwäbisch Gmünd (DE); WIESE, Harry, 73563 Moegglingen (DE)
(74) Vertreter: Zangger, Bernd

(56) Entgegenhaltungen:
- EP-A1- 2 832 572
- EP-A2- 0 976 600
- DE-B1- 2 602 234
- DE-U1- 29 824 173
- DE-U1- 29 824 208

## Beschreibung

### Gebiet der Erfindung

Die vorliegende Erfindung betrifft einen Kraftfahrzeugtank, umfassend einen Haupttank.

### Stand der Technik

Mit Kraftstoff betriebene Kraftfahrzeuge verwenden einen Kraftfahrzeugtank zum Mitführen des benötigten Kraftstoffs, insbesondere einen Benzin- oder Dieseltank. Derartige Kraftstofftanks werden insbesondere für Nutzfahrzeuge wie Lastkraftwagen in relativ großen Dimensionen gebaut, um größere Mengen an Kraftstoff mitführen zu können.

Bei einer Erstbetankung, nach Herstellung eines Kraftfahrzeuges, werden üblicherweise nur geringe Kraftstoffmengen in einen Kraftfahrzeugtank gefüllt. Da sich der Kraftstoff im gesamten Kraftstofftank verteilt, der insbesondere bei Tanks für Lastkraftwagen entsprechend groß sein kann und auch eine komplexe Form aufweisen kann, ist die Nutzung der geringen Erstbetankungsmenge in einem solchen Kraftfahrzeugtank schwierig.

### Zusammenfassung der Erfindung

Es ist die Aufgabe der Erfindung, Kraftfahrzeugtanks in dieser Hinsicht zu verbessern und insbesondere einen kostengünstigen Kraftfahrzeugtank anzugeben, der mit einer geringen Erstbetankungsmenge an Kraftstoff betankt werden kann, die dennoch zuverlässig entnommen und genutzt werden kann.

Die Lösung der Aufgabe erfolgt durch einen Kraftfahrzeugtank, umfassend einen Haupttank, wobei der Haupttank zumindest eine Haupt-Entnahmeeinheit umfasst, wobei die Haupt-Entnahmeeinheit eine Haupt-Vorlaufleitung umfasst zur Entnahme von Kraftstoff aus dem Haupttank, wobei der Kraftfahrzeugtank einen seitlich am Haupttank angeordneten, mit dem Haupttank dicht gefügten Nebentank umfasst, wobei der Nebentank eine Neben-Entnahmeeinheit umfasst, wobei die Neben-Entnahmeeinheit eine Neben-Vorlaufleitung umfasst zur Entnahme von Kraftstoff aus dem Nebentank, wobei der Nebentank einen Füllstutzen umfasst zur unmittelbaren Betankung des Nebentanks, wobei der Nebentank durch eine Trennwand vom Haupttank getrennt ist, wobei die Trennwand in einem in Einbaulage unteren Abschnitt als Wand ohne Öffnung ausgebildet ist und wobei die Trennwand in einem oberen Abschnitt, oberhalb des unteren Abschnitts, zumindest eine Öffnung aufweist um einen Überlauf zwischen Nebentank und Haupttank zu bilden.

Erfindungsgemäß wird somit ein seitlicher Abschnitt eines Kraftfahrzeugtanks als Nebentank ausgebildet. Der Nebentank ist durch dichte Verschweißung, dichte Verklebung oder ähnliches mit dem Haupttank gefügt. Zwischen Haupttank und Nebentank befindet sich die Trennwand, die lediglich in einem unteren Bereich keine Öffnung aufweist und somit das Nebentankreservoir ausbildet, in dem Kraftstoff gesammelt wird, der nicht an den Haupttank abgegeben wird. Das üblicherweise im Betrieb ständig gefüllte Reservoir des Nebentanks erstreckt sich nicht über die gesamte Höhe des Kraftfahrzeugtanks, sondern lediglich bis zu einer Oberkante des Nebentanks, die durch die Untergrenze einer Öffnung oder einer untersten Öffnung in der Trennwand gebildet wird. Die Öffnung, oder Öffnungen, bilden zumindest einen Überlauf in den Haupttank. Die Trennwand kann ab dieser Oberkante des Nebentanks auch die Funktion einer Schwallwand übernehmen und somit eine Schwallwand bilden.

Der Nebentank dient der Betankung des gesamten Kraftstofftanks. Durch die Öffnung oder Öffnungen im oberen Bereich der Trennwand kann der Kraftstoff bei Betankung in den Haupttank überfließen. Eine Entnahme von Kraftstoff ist sowohl unmittelbar aus dem Haupttank, als auch unmittelbar aus dem Nebentank möglich. Die Haupt-Vorlaufleitung dient zur Entnahme von Kraftstoff unmittelbar aus dem Haupttank. Die Neben-Vorlaufleitung dient zur Entnahme von Kraftstoff unmittelbar aus dem Nebentank

Die Trennwand ist in ihrem unteren Bereich vollständig ohne Öffnungen ausgebildet. Sie weist bevorzugt auch keine Ventile auf. Die Trennwand ist daher eine einfache Wand, mit Öffnung oder Öffnungen in einem oberen Bereich der Wand, und ist daher besonders kostengünstig. Die Trennwand bildet zusammen mit äußeren Begrenzungswänden des Nebentanks, den Nebentank aus. Dieser Nebentank kann beispielsweise anstatt einer sonst an dieser Stelle befestigbaren Endkappe auf den Haupttank aufgebracht werden und kann somit einer modulartigen Nachrüstung eines Kraftstofftanks mit einem Betankungsmodul dienen.

Es kann somit eine kostengünstige und robuste Integration eines Betankungsmoduls bei gleichzeitiger Steigerung der reellen Reichweite insbesondere bei Nutzfahrzeugtanks erreicht werden.

Weitere Vorteile einer erfindungsgemäßen Lösung können sein:
Es ist kein zusätzlicher Behälter im Tank zur Bildung des Nebentanks erforderlich und die damit verbundenen Fixierelemente entfallen. Ein robusteres Design entsteht dadurch. Es kommt zu einer Reduktion der Ausfallwahrscheinlichkeit im Betrieb aufgrund Reduktion der bestehenden Komponenten und Verwendung bewährter, einfacher Komponenten. Es sind keine neuen Schnittstellen erforderlich. Es ist keine besondere Lösung für Servicebarkeit/Wartung des Nebentanks erforderlich. Ein gewünschter Füllstand des Nebentanks nach Erstbetankung kann flexibel realisiert werden durch Wahl der Position der Öffnung oder Öffnungen bzw. des Lochbildes an der Trennwand. Eine Kombination von einem Tank im Tank (Metall oder Kunststoff) ist nicht erforderlich. Es können geringere Investitionskosten erforderlich sein, durch Verwendung von bestehenden Prozessen und Komponenten zur Fertigung des Kraftfahrzeugtanks. Betankung ist über Ersatzkanister möglich, da nur der Nebentank befüllt und die Kraftstoffversorgung wieder hergestellt werden kann. Üblicherweise ist eine Kanisterbetankung über den Haupttank unzureichend, aufgrund der Verteilung des Kraftstoffs im größeren Haupttank.

Weiterbildungen der Erfindung sind in den abhängigen Ansprüchen, der Beschreibung sowie den beigefügten Zeichnungen angegeben.

Vorzugsweise ist an dem im Haupttank befindlichen Ende der Haupt-Vorlaufleitung ein Ventil angeordnet, dass die Haupt-Vorlaufleitung schließt, wenn kein Kraftstoff am Ventil vorhanden ist, insbesondere ein Schwimmerventil. In diesem Fall ist somit die Haupt-Vorlaufleitung geschlossen und Kraftstoff kann ausschließlich aus dem Nebentank abgesaugt werden.

Bevorzugt umfasst die Haupt-Entnahmeeinheit eine Füllstandsmessung und/oder eine Entlüftung.

Bevorzugt sind die Haupt-Vorlaufleitung und die Neben-Vorlaufleitung außerhalb der äußeren Begrenzungswände des Kraftfahrzeugtanks mechanisch und/oder fluidleitend miteinander verbunden. Die beiden Vorlaufleitungen können also mechanisch gekoppelt sein, zum Beispiel aneinander befestigt, und/oder auch zu einer gemeinsamen Vorlaufleitung fluidleitend verbunden sein, so dass die gemeinsamen Vorlaufleitung zu einem Verbraucher des Kraftstoffs geführt ist.

Vorzugsweise umfasst die Neben-Entnahmeeinheit eine Neben-Rücklaufleitung, zur Rückführung von entnommenem Kraftstoff, unmittelbar in den Nebentank.

Die Anordnung des Nebentanks "seitlich" am Haupttank, bedeutet eine Anordnung an einem Rand, also an einer Begrenzungsfläche des Haupttanks, also keine Anordnung innen oder mittig im Haupttank.

Der Kraftfahrzeugtank weist bevorzugt die Form eines Quaders oder Zylinders auf. Der Kraftfahrzeugtank erstreckt sich bevorzugt in einer Längsrichtung am weitesten. Der Nebentank ist bevorzugt seitlich in dieser Längsrichtung neben dem Haupttank angeordnet, in der Art einer Endkappe, oder seitlich in der Querrichtung, normal auf die Längsrichtung, also seitlich am Mantel des Haupttanks. Der Haupttank und/oder der Nebentank und/oder die Trennwand bestehen bevorzugt aus Metall, insbesondere aus Stahl. Eine teilweise oder vollständige Ausbildung dieser Komponenten aus Kunststoff ist ebenso möglich.

Bevorzugt sind im Haupttank mindestens eine Schwallwand, bevorzugt mehrere Schwallwände angeordnet, um den Haupttank in mindestens zwei, bevorzugt in mehrere, besonders bevorzugt etwa gleichgroße, Schwall-Bereiche zu unterteilen.

Bevorzugt umfasst der Haupttank keinen Füllstutzen zur unmittelbaren Betankung des Haupttanks, so dass eine Betankung des Haupttanks ausschließlich über den Nebentank erfolgt.

Durch einen Nebentank, der als eine äußere Begrenzungswand eine einfache Trennwand mit Öffnung oder Öffnungen in einem oberen Bereich der Trennwand aufweist, kann somit ein einfaches Betankungsmodul für einen Kraftstofftank geschaffen werden.

### Kurzbeschreibung der Zeichnungen

Die Erfindung wird im Folgenden beispielhaft unter Bezugnahme auf die Zeichnungen beschrieben.
- Fig. 1: ist eine dreidimensionale Darstellung eines erfindungsgemäßen Kraftfahrzeugtanks.
- Fig. 2: ist eine dreidimensionale Darstellung des Nebentanks eines erfindungsgemäßen Kraftfahrzeugtanks.
- Fig. 3: ist eine Darstellung eines erfindungsgemäßen Kraftfahrzeugtanks von der Seite.
- Fig. 4: ist eine Darstellung des Nebentanks eines erfindungsgemäßen Kraftfahrzeugtanks von innen.
- Fig. 5: ist eine Darstellung des Nebentanks eines erfindungsgemäßen Kraftfahrzeugtanks von außen.

### Detaillierte Beschreibung der Erfindung

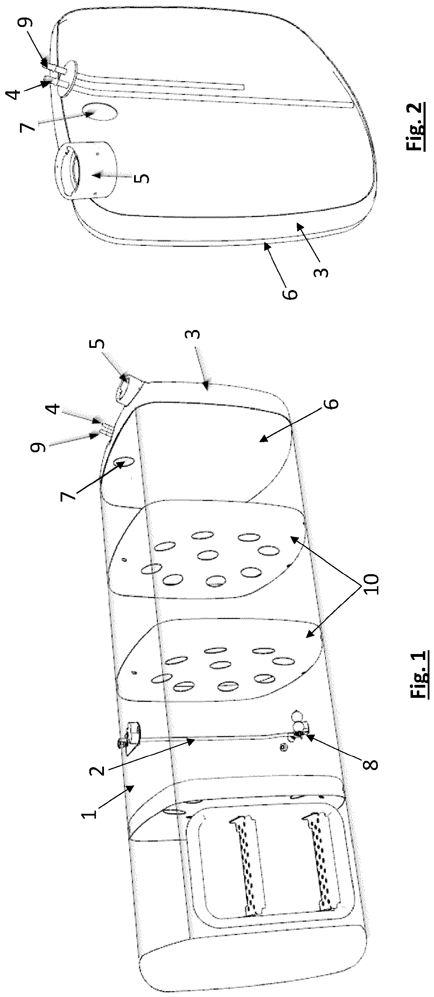

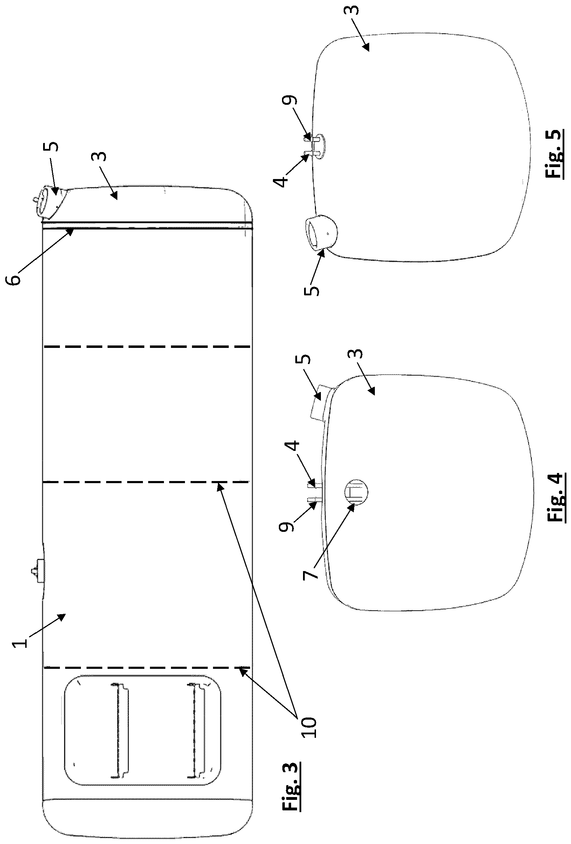

In den Fig. 1 und Fig. 3 ist ein erfindungsgemäßer Kraftfahrzeugtank dargestellt. Die Fig. 2 sowie Fig. 4 und 5 zeigen den Nebentank alleine.

Der Kraftfahrzeugtank umfassend einen im Wesentlichen quaderförmigen Haupttank 1, wobei der Haupttank 1 eine Haupt-Entnahmeeinheit 2 umfasst, wobei die Haupt-Entnahmeeinheit eine Haupt-Vorlaufleitung 2 umfasst zur Entnahme von Kraftstoff aus dem Haupttank 1.

An dem im Haupttank 1 befindlichen Ende der Haupt-Vorlaufleitung 2 ist ein Ventil 8 angeordnet, dass die Haupt-Vorlaufleitung 2 schließt, wenn kein Kraftstoff am Ventil 8 vorhanden ist, nämlich ein Schwimmerventil. Die Haupt-Entnahmeeinheit 2 umfasst zudem eine Füllstandsmessung und eine Entlüftung.

Im Haupttank 1 sind mehrere vertikale Schwallwände 10 mit jeweils mehreren Öffnungen angeordnet, um den Haupttank 1 in mehrere Kammern zu teilen.

Der Kraftfahrzeugtank umfasst einen seitlich am Haupttank 1 angeordneten, mit dem Haupttank 1 dicht verschweißten Nebentank 3.

Der Nebentank 3 umfasst einen Füllstutzen 5 zur unmittelbaren Betankung des Nebentanks 3 und zur mittelbaren Betankung des Haupttanks 1. Der Haupttank 1 hat keinen eigenen Füllstutzen zur unmittelbaren Betankung des Haupttanks 1, so dass eine Betankung des Haupttanks 1 ausschließlich über den Nebentank 3 und die Öffnung 7 in der Trennwand 6 erfolgt.

Der Nebentank 3 ist durch eine Trennwand 6 vom Haupttank 1 getrennt. Der Nebentank 3 ist im Bereich der Trennwand 6 mit dem Haupttank 1 durch außen am Kraftfahrzeugtank umlaufende Schweißnähte dicht verschweißt.

Die Trennwand 6 ist in einem in Einbaulage unteren Abschnitt als einfache Wand ohne Öffnung ausgebildet. In einem oberen Abschnitt, oberhalb des unteren Abschnitts, weist die Trennwand 6 zumindest eine Öffnung 7 oder auch mehrere Öffnungen 7 auf, um einen Überlauf zwischen Nebentank 3 und Haupttank 1 zu bilden.

Der Nebentank 3 umfasst eine Neben-Entnahmeeinheit, wobei die Neben-Entnahmeeinheit eine Neben-Vorlaufleitung 4 umfasst zur Entnahme von Kraftstoff aus dem Nebentank 3 und eine Neben-Rücklaufleitung 9 zur Rückführung von entnommenem Kraftstoff in den Nebentank 3. Die Haupt-Vorlaufleitung 2 und die Neben-Vorlaufleitung 4 sind (in den Fig. nicht dargestellt) außerhalb der äußeren Begrenzungswände des Kraftfahrzeugtanks fluidleitend miteinander verbunden, indem sie in eine gemeinsame Vorlaufleitung führen.

Der Haupttank 1, der Nebentank 3 und die Trennwand 6 bestehen aus Metall.

Durch die Verwendung eines Nebentanks, der durch eine Kombination aus Schwallwand und Trennwand von einem Haupttank getrennt ist, kann die erforderliche Erstbefüllmenge reduziert werden, wobei die Erstbefüllmenge variabel über das Lochbild der Trennwand gestaltbar ist. Eine verbesserte Entnahme bei bestimmten Fahrsituationen, wie Schräglage, Berg- und Talfahrt bei Verwendung des Kraftstofftanks bei einem Endkunden ist ebenso möglich, sowie eine reelle Steigerung der Reichweite des Kraftfahrzeugs, da die Schaltpunkte der Entnahmeeinheit effizienter gestaltet werden können.

### Bezugszeichenliste

- 1: Haupttank
- 2: Haupt-Vorlaufleitung
- 3: Nebentank
- 4: Neben-Vorlaufleitung
- 5: Füllstutzen
- 6: Trennwand
- 7: Öffnung
- 8: Ventil
- 9: Neben-Rücklaufleitung
- 10: Schwallwand

## Patentansprüche

1. Kraftfahrzeugtank, umfassend einen Haupttank (1), wobei der Haupttank (1) zumindest eine Haupt-Entnahmeeinheit (2) umfasst, wobei die Haupt-Entnahmeeinheit eine Haupt-Vorlaufleitung (2) umfasst zur Entnahme von Kraftstoff aus dem Haupttank,
**dadurch gekennzeichnet , dass** der Kraftfahrzeugtank einen seitlich am Haupttank (1) angeordneten, mit dem Haupttank (1) dicht gefügten Nebentank (3) umfasst, wobei der Nebentank (3) eine Neben-Entnahmeeinheit umfasst, wobei die Neben-Entnahmeeinheit eine Neben-Vorlaufleitung (4) umfasst zur Entnahme von Kraftstoff aus dem Nebentank (3), wobei der Nebentank (3) einen Füllstutzen (5) umfasst zur unmittelbaren Betankung des Nebentanks (3), wobei der Nebentank (3) durch eine Trennwand (6) vom Haupttank (1) getrennt ist, wobei die Trennwand (6) in einem in Einbaulage unteren Abschnitt als Wand ohne Öffnung ausgebildet ist und wobei die Trennwand in einem oberen Abschnitt, oberhalb des unteren Abschnitts, zumindest eine Öffnung (7) aufweist, um einen Überlauf zwischen Nebentank (3) und Haupttank (1) zu bilden.

2. Kraftfahrzeugtank nach Anspruch 1,
**dadurch gekennzeichnet , dass** an dem im Haupttank (1) befindlichen Ende der Haupt-Vorlaufleitung (2) ein Ventil (8) angeordnet ist, dass die Haupt-Vorlaufleitung (2) schließt, wenn kein Kraftstoff am Ventil (8) vorhanden ist, insbesondere ein Schwimmerventil.

3. Kraftfahrzeugtank nach zumindest einem der vorhergehenden Ansprüche,
**dadurch gekennzeichnet , dass** die Trennwand (6) in dem oberen Abschnitt, oberhalb des unteren Abschnitts, mehrere Öffnungen (7) aufweist und somit eine Schwallwand bildet.

4. Kraftfahrzeugtank nach zumindest einem der vorhergehenden Ansprüche,
**dadurch gekennzeichnet , dass** der Haupttank (1) und/oder der Nebentank (3) und/oder die Trennwand (6) aus Metall bestehen.

5. Kraftfahrzeugtank nach zumindest einem der vorhergehenden Ansprüche,
**dadurch gekennzeichnet , dass** die Haupt-Entnahmeeinheit (2) eine Füllstandsmessung und/oder eine Entlüftung umfasst.

6. Kraftfahrzeugtank nach zumindest einem der vorhergehenden Ansprüche,
**dadurch gekennzeichnet , dass** die Haupt-Vorlaufleitung (2) und die Neben-Vorlaufleitung (4) außerhalb der äußeren Begrenzungswände des Kraftfahrzeugtanks mechanisch und/oder fluidleitend miteinander verbunden sind.

7. Kraftfahrzeugtank nach zumindest einem der vorhergehenden Ansprüche,
**dadurch gekennzeichnet , dass** die Neben-Entnahmeeinheit (4) eine Neben-Rücklaufleitung (9) umfasst zur Rückführung von entnommenem Kraftstoff in den Nebentank (3).

8. Kraftfahrzeugtank nach zumindest einem der vorhergehenden Ansprüche,
**dadurch gekennzeichnet , dass** im Haupttank (1) mindestens eine Schwallwand (10), bevorzugt mehrere Schwallwände (10) angeordnet sind, um den Haupttank (1) in mindestens zwei, bevorzugt in mehrere, Bereiche zu teilen.

9. Kraftfahrzeugtank nach zumindest einem der vorhergehenden Ansprüche,
**dadurch gekennzeichnet , dass** der Haupttank (1) keinen Füllstutzen umfasst zur unmittelbaren Betankung des Haupttanks (1), so dass eine Betankung des Haupttanks (1) ausschließlich über den Nebentank (3) erfolgt.

## Claims

1. A motor vehicle tank comprising a main tank (1), wherein the main tank (1) comprises at least one main extraction unit (2), wherein the main extraction unit comprises a main flow line (2) for extracting fuel from the main tank,
**characterized in that** the motor vehicle tank comprises an auxiliary tank (3) arranged at the side of the main tank (1) and tightly joined to the main tank (1), wherein the auxiliary tank (3) comprises an auxiliary extraction unit, wherein the auxiliary extraction unit comprises an auxiliary flow line (4) for extraction of fuel from the auxiliary tank (3), wherein the auxiliary tank (3) comprises a filler connection (5) for direct filling of the auxiliary tank (3), wherein the auxiliary tank (3) is separated from the main tank (1) by a partition wall (6), wherein the partition wall (6) is formed as a wall without opening in a portion which is lower in the installation position, and wherein the partition wall has at least one opening (7) in an upper portion above the lower portion so as to form an overflow between the auxiliary tank (3) and the main tank (1).

2. The motor vehicle tank has claimed in claim 1,
**characterized in that** a valve (8), in particular a float valve, which closes the main flow line (2) if no fuel is present at the valve (8), is arranged at the end of the main flow line (2) situated in the main tank (1).

3. The motor vehicle tank as claimed in at least one of the preceding claims,
**characterized in that** in the upper portion above the lower portion, the partition wall (6) has several openings (7) and hence forms a baffle.

4. The motor vehicle tank as claimed in at least one of the preceding claims,
**characterized in that** the main tank (1) and/or the auxiliary tank (3) and/or the partition wall (6) consist of metal.

5. The motor vehicle tank as claimed in at least one of the preceding claims,
**characterized in that** the main extraction unit (2) comprises a fill level meter and/or a vent.

6. The motor vehicle tank as claimed in at least one of the preceding claims,
**characterized in that** the main flow line (2) and the auxiliary flow line (4) are connected together mechanically and/or fluid-conductively outside the outer delimiting walls of the motor vehicle tank.

7. The motor vehicle tank as claimed in at least one of the preceding claims,
**characterized in that** the auxiliary extraction unit (4) comprises an auxiliary return line (9) for the return of extracted fuel to the auxiliary tank (3).

8. The motor vehicle tank as claimed in at least one of the preceding claims,
**characterized in that** at least one baffle (10), preferably several baffles (10), are arranged in the main tank (1) so as to divide the main tank (1) into at least two, preferably into several regions.

9. The motor vehicle tank as claimed in at least one of the preceding claims,
**characterized in that** the main tank (1) comprises no filler connection for direct filling of the main tank (1), so that the main tank (1) can only be filled via the auxiliary tank (3).

## Revendications

1. Réservoir de véhicule automobile, comprenant un réservoir principal (1), le réservoir principal (1) comprenant au moins une unité de prélèvement principale (2), l'unité de prélèvement principale comprenant une conduite d'arrivée principale (2) pour prélever du carburant du réservoir principal,
**caractérisé en ce que** le réservoir de véhicule automobile comprend un réservoir secondaire (3) agencé latéralement au réservoir principal (1), assemblé de manière étanche avec le réservoir principal (1), le réservoir secondaire (3) comprenant une unité de prélèvement secondaire, l'unité de prélèvement secondaire comprenant une conduite d'arrivée secondaire (4) pour prélever du carburant du réservoir secondaire (3), le réservoir secondaire (3) comprenant une tubulure de remplissage (5) pour l'approvisionnement direct du réservoir secondaire (3), le réservoir secondaire (3) étant séparé du réservoir principal (1) par une paroi de séparation (6), la paroi de séparation (6) étant réalisée dans une section inférieure en position de montage sous forme de paroi sans ouverture et la paroi de séparation présentant dans une section supérieure, au-dessus de la section inférieure, au moins une ouverture (7) pour former un trop-plein entre le réservoir secondaire (3) et le réservoir principal (1).

2. Réservoir de véhicule automobile selon la revendication 1, **caractérisé en ce qu'**à l'extrémité de la conduite d'arrivée principale (2) se trouvant dans le réservoir principal (1) est agencée une soupape (8) qui ferme la conduite d'arrivée principale (2) lorsqu'il n'y a pas de carburant au niveau de la soupape (8), notamment une soupape à flotteur.

3. Réservoir de véhicule automobile selon au moins l'une quelconque des revendications précédentes, **caractérisé en ce que** la paroi de séparation (6) présente plusieurs ouvertures (7) dans la section supérieure, au-dessus de la section inférieure, et forme ainsi une paroi anti-débordement.

4. Réservoir de véhicule automobile selon au moins l'une quelconque des revendications précédentes, **caractérisé en ce que** le réservoir principal (1) et/ou le réservoir secondaire (3) et/ou la paroi de séparation (6) sont constitués de métal.

5. Réservoir de véhicule automobile selon au moins l'une quelconque des revendications précédentes, **caractérisé en ce que** l'unité de prélèvement principale (2) comprend une mesure de niveau de remplissage et/ou une purge d'air.

6. Réservoir de véhicule automobile selon au moins l'une quelconque des revendications précédentes, **caractérisé en ce que** la conduite d'arrivée principale (2) et la conduite d'arrivée secondaire (4) sont reliées mécaniquement et/ou fluidiquement entre elles à l'extérieur des parois de délimitation extérieures du réservoir de véhicule automobile.

7. Réservoir de véhicule automobile selon au moins l'une quelconque des revendications précédentes, **caractérisé en ce que** l'unité de prélèvement secondaire (4) comprend une conduite de retour secondaire (9) pour le retour de carburant prélevé dans le réservoir secondaire (3).

8. Réservoir de véhicule automobile selon au moins l'une quelconque des revendications précédentes, **caractérisé en ce qu'**au moins une paroi anti-débordement (10), de préférence plusieurs parois anti-débordement (10), sont agencées dans le réservoir principal (1) afin de diviser le réservoir principal (1) en au moins deux zones, de préférence en plusieurs zones.

9. Réservoir de véhicule automobile selon au moins l'une quelconque des revendications précédentes, **caractérisé en ce que** le réservoir principal (1) ne comprend pas de tubulure de remplissage pour l'approvisionnement direct du réservoir principal (1), de telle sorte qu'un approvisionnement du réservoir principal (1) s'effectue exclusivement par l'intermédiaire du réservoir secondaire (3).
